# EUROPEAN PATENT APPLICATION

(11) **EP 0 706 303 A2**
(43) Date of publication of application: **10.04.1996**
(21) Application number: 95500116.9
(22) Date of filing: 31.07.1995
(51) Int. Cl.: H05B 6/12, H05B 6/36

(54) **Improved coil for induction heating**

(30) Priority: 27.09.1994 ES 9402027
(71) Applicant: BALAY, S.A., E-50016 Zaragoza (ES)
(72) Inventor: Garcia Jiménez, José Ramon, E-50016 Zaragoza (ES); Garcia Martinez, José Andrés, E-50016 Zaragoza (ES)

(57) **Abstract**

Improved coil for induction heating, to be installed in cooking appliances, the coil being under the ceramic glass over which the recipient is placed, and so formed because the coil is composed of a metal band (1) inserted in a insulator ceramic support (2) for its fixing, in such a way that said ceramic support (2) incorporates the soft irons (3), preferably four, orthogonally located two by two, having foreseen that the ceramic support (2) is fitted to a metallic support which shields the magnetic field and fixes the core to the appliance, having a great number of fixing points for its adaptation to several models, and one of its special features is that over the coil (1) there are placed a electrical insulator (5) and a capacitive shielding sheet.

## Description

### OBJECT OF THE INVENTION

The following invention, as stated in the heading of this descriptive memory, refers to an improved coil for induction heating, to be installed on induction cooking appliances, in such a way that, by means of induction cooking, the calorific energy is generated in the own recipient made of ferromagnetic material that contains the food, located over the ceramic glass under which the induction coil is placed.

The improvements introduced are based on the design of an insulator ceramic support where that coil, made of conductor material, is mounted, in such a way that the ceramic support is fitted to a metallic support which, at the same time, works as a fixing element from the whole set to the appliance, and that metallic support works also as a shield of the magnetic field, not being necessary the positioning of other complementary elements as happens nowadays.

Besides, the coil may incorporate an capacitive shielding and an insulator electric element which will be located between the top side of the whole coil and the ceramic glass.

In this way, we obtain a coil for induction heating where the connection between the metal band and the ceramic glass is carried out by fixing, thus avoiding the sticking of the different elements among each other, and resulting in a recyclable and ecological product.

### BACKGROUND OF THE INVENTION

As it is well known at present, the means used for the cooking of food are generally based on the generation of heat by thermic conductivity, being necessary the presence of a flame or calorific source, and this causes losses by thermic inertia.

So, the surface on which the recipient containing the food is placed must reach high temperatures since it is the one which transmits heat to the recipient, in such a way that if there is an overflow of the contents of the recipient, it incrusts in or sticks to the plate where you are cooking, thus making its cleaning difficult, and at the same time creating nasty smells due to the burning of the overflown food.

In this case, the calorific source is defined by a resistance which may be placed according to different shapes on the support base of the ceramic glass, being that resistance far away from the cooking surface, such a distance that it follows the rules for its insulation at a distance.

Besides, for the induction cooking, we often use flat coils of multiple-wire filaments, through which a current of high frequency circulates, and all the filaments (approximately 20) are closely in contact, or with Litz wire, in which case each filament if covered so as not to be in contact among each other.

In this way, the problem is how to get the geometric flat shape of the coil, which is somehow difficult.

The coil is therefore formed with its filaments in a insulated tubular body that is rolled betwen two mica sheets, or otherwise getting its stiffness by covering its filaments.

Moreover, the holder of this invention is also the holder of the Invention Patent P9200787 and its Addition Certificates Nos. P9300505 and P9401077, in such a way that the above mentioned Patent claims for induction heating where the coil is formed by a rigid wire and it disposes on a top grooving where it is placed, the turns being equidistant or not, while the support is made of plastic material, and under the top side some grooves are used for locating the corresponding soft irons, those grooves being preferably four and orthogonally located two by two. The fixing of the stiff wire forming the coil to the support where is located the grooving made for that purpose is carried out by disposing of some U-shaped grooves, with convergent wings, by putting pressure.

On the other hand, in the Addition Certificate P9300505 to the main Patent P9200787, some improvements are requested and they consist of the materialization of a coil thorugh a metal band rolled in a vertical position, which is placed on a mica sheet and is fixed to it by sticking, this mica sheet lying on the top side of the support of plastic material.

Also, in the Addition Certificate P9401077, a capacitive shielding sheet is requested in order to allow the discharge of the stray capacity between the inductor element and the recipient without interfering the magnetic field.

### DESCRIPTION OF THE INVENTION

In this memory, we describe an improved coil for induction heating in such a way that the coil is formed by a metal band rolled in an spiral of conductor material, and is fixed to an insulator ceramic support, the fixing carried out by inserting the band in the ceramic support, lying externally to the ceramic support the metallic support that works as a shield of the magnetic field and as an element of fixing to the appliance.

In the insulator ceramic support the soft irons are placed, preferably four and in an orthogonal position two by two, and used as a magnetic flux concentrators.

Besides, the ceramic support may be manufactured in such a way that it works as a ferromagnetic element for which, in its own manufacturing mass, the necessary element (iron oxide) will be incorporated. In this way, the soft irons will not be necessary since the ferromagnetic ceramic support performs the same function as the soft irons, by concentrating the magnetic flux.

So, the metal band is inserted in the ceramic support, thus avoiding the connection by sticking and getting a reciclable and ecological element, and at the same time withstanding higher temperatures, not being necessary the incorporation of thermal controls, but only a conventional temperature control.

On the other hand, the metallic support of the whole set that works as a shield of the magnetic field is provided with several fixing points, thus making its installation easier in a variety of models of appliances.

The top part of the metal band is levelled with the external perimetric edge of the insulator ceramic support, where an insulator electric element (such as a mica sheet) may be located, and being used as a support of a capacitive shielding.

In order to complete the description that follows and to help to a better understanding of its features, this descriptive memory comes together with a design whose only figure, in an illustrative and not restricted way, shows the most significant details of the invention, described in this memory.

### BRIEF DESCRIPTION OF THE DRAWINGS

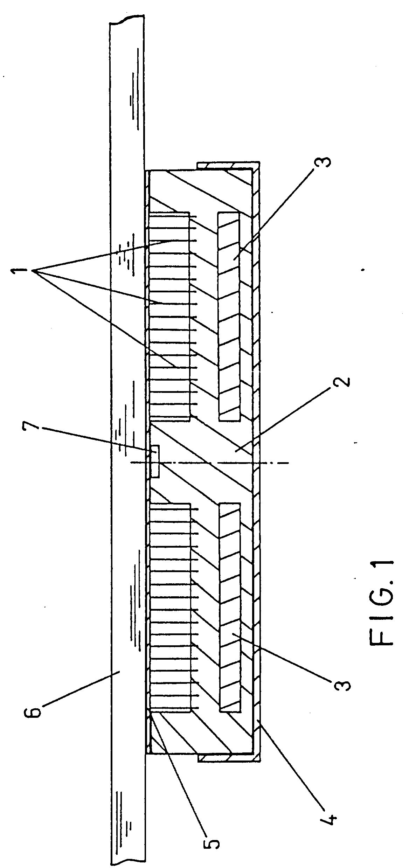

Figure 1. Shows a sectioned view of the whole coil, as per a diametric section, where you can see the metal band rolled in an spiral, inserted in the ceramic support that incorporates the soft irons, as well as the metallic support for shielding and fixing the whole set.

### DESCRIPTION OF A PREFERRED EMBODIMENT

Considering the above mentioned figure and following the numbering adopted, we can see how the whole coil is formed by the band (1) of conductor material rolled in an spiral that is inserted in the insulator ceramic support (2) where the soft irons (3) are incorporated, which preferably will be four and orthogonally placed two by two.

The ceramic support (2) will be located on a metallic support (4) that, at the same time that works as a shield of the magnetic field, it also works fixing the core to the appliance, with the advantage that by disposing several fixing points it can be adapted to a great variety of models.

The metal band (1) may be made, according to its connection side to the ceramic support (2), in the shape of saw teeth, which will make its insertion and fixing easier, lying itself on its top side levelled with the ceramic support (2).

Also, on the top side of the metal band (1) and the ceramic support (2), an electrical insulator (5), such as a mica sheet, may be placed, and it will work at a time as a support of the capacitive shielding sheet.

In the construction of the ceramic support (2) the necessary elements, such as iron oxide, may be incorporated in the obtention mass, thus obtaining a feromagnetic insulator ceramic support, and therefore not being necessary the incorporation of the soft irons (3), since this ceramic support will be the one that concentrates the magnetic field.

By constructing the coil for induction as described previously, by fixing the metal band (1) when inserting it in the ceramic support (2), we avoid the incorporation of adhesive tape or glues, thus obtaining a recyclable and ecological coil, and besides, given that the support of the metal band is made of ceramic material, it may withstand higher temperatures without needing any thermal controls.

The coil incorporates the conventional temperature control (7), as well as the corresponding terminals.

The whole set described above is located under the ceramic glass (6) in order to put on it the recipient for the cooking of food, coinciding with the coil.

## Claims

1. IMPROVED COIL FOR INDUCTION HEATING, to be installed in cooking appliances, the coil lying under the ceramic glass over which the recipient is located, and mainly characterized because the coil is formed by the metal band (1) which is inserted for its fixing in the insulator ceramic support (2), in such a way that said ceramic support (2) incorporates the soft irons (3), preferably four and orthogonally located two by two, having foreseen that the ceramic support (2) which is fitted to a metallic support (4) whLch shields the magnetic field and fixes the core to the appliance, which has a great number of fixing points for its adaptation to the different models, and with the special feature that over the band (1) the electric insulator (5) and the capacitive shielding sheet are placed.

2. IMPROVED COIL FOR INDUCTION HEATING, as per the claim above, and with the feature that the ceramic support (2) may incorporate in the own manufacturing mass the necessary product of iron oxide used as a magnetic flux concentrators, without needing soft irons.
